# EUROPEAN PATENT APPLICATION

(11) **EP 4 711 302 A1**
(43) Date of publication of application: **18.03.2026**
(21) Application number: 24803481.1
(22) Date of filing: 08.05.2024
(51) Int. Cl.: B65D 65/40, B32B 9/00, B32B 27/28

(54) **PRODUCT**

(30) Priority: 09.05.2023 JP 2023077237
(71) Applicant: Kuraray Co., Ltd., Kurashiki-shi, Okayama 710-0801 (JP)
(72) Inventor: YAMAMOTO, Yoshio, Kurashiki-shi, Okayama 713-8550 (JP); NONAKA, Yasuhiro, Osaka-shi, Osaka 530-8611 (JP)
(74) Representative: Müller-Boré & Partner Patentanwälte PartG mbB
(86) International application number: PCT/JP2024/017032
(87) International publication number: WO 2024/232372

(57) **Abstract**

A product comprising: a package comprising a multilayer structure; and a content contained in the package, the content having a sodium chloride content of 1% by mass or more, wherein the multilayer structure comprises: a barrier layer (A) comprising an EVOH (a) as a main component; an inorganic vapor-deposited layer (B) laminated on the barrier layer (A), the inorganic vapor-deposited layer (B) having an average thickness of 7 nm or more and 100 nm or less; and a heat-sealing layer (E) which is an outermost layer on a side opposite to a side of the barrier layer (A) on which the inorganic vapor-deposited layer (B) is laminated, the heat-sealing layer (E) comprising a polyolefin (e) as a main component, wherein a total average thickness of layers comprising a polyolefin resin as a main component and being laminated on a side opposite to a side of the barrier layer (A) on which the inorganic vapor-deposited layer (B) is laminated is 45 µm or more, and the heat-sealing layer (E) is positioned on an inner surface side of the package.

## Description

### [TECHNICAL FIELD]

The present invention relates to a product having a package and a content.

### [BACKGROUND ART]

Packaging materials for long-term storage of foods or the like are often required to have gas barrier properties such as an oxygen barrier property. Oxidative degradation of foods or the like by oxygen penetration and/or propagation of microorganisms can be inhibited by using a packaging material having high gas barrier properties. As a layer which improves the gas barrier properties: a metal foil or a vapor-deposited metal layer of aluminum or the like; a vapor-deposited inorganic-oxide layer of a silicon oxide, an aluminum oxide, or the like; or the like has been widely used. On the other hand, a resin layer of a resin having gas barrier properties, such as a vinyl alcohol polymer or polyvinylidene chloride, has been also widely used. A vinyl alcohol polymer is characterized by gas barrier properties, which it exhibits through crystallization and densification by way of hydrogen bonding between hydroxy groups in its molecules. In particular, an ethylene-vinyl alcohol copolymer (hereinafter, may be abbreviated to "EVOH") has superior thermal stability, and thus is suitable for melt forming. Thus, multilayer films including an EVOH layer as an intermediate layer have been widely used as gas barrier packaging materials as co-extrusion techniques have been developed (Patent Document 1).

Furthermore, in recent years, with the impetus of environmental issues and waste issues, there have been increasing worldwide demands for so-called post-consumer recycling, being the recovering and recycling of packaging materials that have been consumed on the market (hereinafter, may be simply abbreviated to recycling). In recycling, a process in which recovered packaging materials are cut and, as needed, sorted and washed, and then melted and mixed using an extruder is typically employed. Various formed products are produced using pellets thus obtained. In this regard, it is required that the packaging materials be composed of a single material as much as possible (monomaterialization), thereby enabling obtaining recycled resins having high purity and high quality. For this purpose, a demand for barrier films containing polyolefins, which are widely used as packaging materials, as a main material is increasing, and a vapor-deposited multilayer film obtained by laminating an inorganic vapor-deposited layer on an EVOH layer of a polypropylene-based multilayer film having the EVOH layer, thereby enabling both gas barrier properties and recyclability to be achieved has been also proposed (Patent Document 2).

### [PRIOR ART DOCUMENTS]

### [Patent Documents]

Patent Document 1: PCT International Publication No. 2020/071513
Patent Document 2: PCT International Publication No. 2020/184523

### [SUMMARY OF THE INVENTION]

### [Problems to be Solved by the Invention]

A package employing a polyolefin-based multilayer structure in which an inorganic vapor-deposited layer is laminated on an EVOH layer may be occasionally accompanied by deterioration of the appearance and the gas barrier properties of the package during storage of the content containing sodium chloride. On the other hand, in a case in which a package provided by laminating an aluminum foil in place of the inorganic vapor-deposited layer is used for the purpose of inhibiting deterioration in appearance, homogeneously mixing with other components is difficult in a melt blending step when recovery and reutilization are executed, making it difficult to maintain appearance properties, gas barrier properties, and recyclability in a well-balanced manner.

In view of such circumstances, an object of the present invention is to provide a product that involves a package employing a polyolefin-based multilayer structure in which an inorganic vapor-deposited layer is laminated on an EVOH layer, and that inhibits deterioration of the appearance and the gas barrier properties when storing a content containing sodium chloride, while maintaining recyclability.

### [Means for Solving the Problems]

According to the present invention, the above-described object is achieved by providing the following:
(1) A product comprising: a package comprising a multilayer structure; and a content contained in the package, the content having a sodium chloride content of 1% by mass or more, wherein the multilayer structure comprises: a barrier layer (A) comprising an ethylene-vinyl alcohol copolymer (a) (hereinafter, may be abbreviated to "EVOH (a)") as a main component; an inorganic vapor-deposited layer (B) laminated on the barrier layer (A), the inorganic vapor-deposited layer (B) having an average thickness of 7 nm or more and 100 nm or less; and a heat-sealing layer (E) which is an outermost layer on a side opposite to a side of the barrier layer (A) on which the inorganic vapor-deposited layer (B) is laminated, the heat-sealing layer (E) comprising a polyolefin (e) as a main component, wherein a total average thickness of layers comprising a polyolefin resin as a main component and being laminated on a side opposite to a side of the barrier layer (A) on which the inorganic vapor-deposited layer (B) is laminated is 45 µm or more, and the heat-sealing layer (E) is positioned on an inner surface side of the package;
(2) The product according to (1), wherein the barrier layer (A) is stretched in at least a uniaxial direction;
(3) The product according to (1) or (2), wherein the barrier layer (A) has an average thickness of 0.1 µm or more and 20 µm or less;
(4) The product according to any one of (1) to (3), wherein a proportion of the average thickness of the barrier layer (A) with respect to an average thickness of the multilayer structure is 5% or less;
(5) The product according to any one of (1) to (4), wherein the inorganic vapor-deposited layer (B) is composed of aluminum, aluminum oxide, or silicon oxide;
(6) The product according to any one of (1) to (5), wherein the heat-sealing layer (E) has an average thickness of 20 µm or more and 200 µm or less;
(7) The product according to any one of (1) to (6), wherein the multilayer structure comprises: an adhesion layer (C) comprising an adhesive resin (c) as a main component; and a polyolefin layer (D) comprising a polyolefin (d) as a main component, and the multilayer structure has a layer configuration in which the inorganic vapor-deposited layer (B), the barrier layer (A), the adhesion layer (C), the polyolefin layer (D), and the heat-sealing layer (E) are laminated in this order;
(8) The product according to (7), wherein the barrier layer (A), the adhesion layer (C), and the polyolefin layer (D) are stretched in at least a uniaxial direction;
(9) The product according to (7) or (8), wherein the barrier layer (A), the adhesion layer (C), and the polyolefin layer (D) are a coextruded film;
(10) The product according to any one of (7) to (9), wherein resins serving as main components of the polyolefin layer (D) and the heat-sealing layer (E) are the same resin species;
(11) The product according to any one of (1) to (10), wherein the sodium chloride content of the content is 5% by mass or less;
(12) The product according to any one of (1) to (11), wherein the content comprises lipid;
(13) The product according to (12), wherein the lipid content of the content is 95% by mass or less;
comprises triglyceride as a main component.

### [Effects of the Invention]

The present invention enables providing a package employing a polyolefin-based multilayer structure in which an inorganic vapor-deposited layer is laminated on an EVOH layer surface, the package being capable of inhibiting deterioration of the appearance and the gas barrier properties when storing a content containing sodium chloride, while maintaining recyclability. The "recyclability" as referred to herein means that when the recovered material of the package contained in the product of the present invention is melt kneaded to produce the recovered composition, gelation of the resin can be inhibited, and the recovered composition that has superior appearance can be efficiently produced. The recyclability can be evaluated by a recyclability test described in the Examples.

### [Description of Embodiments]

Hereinafter, embodiments of the present invention will be described. It is to be noted that in the following description, specific materials (compounds, etc.) may be exemplified as those that exhibit specific functions, but the present invention is not limited to a mode using such materials. Furthermore, unless otherwise specified, the materials exemplified may be used alone or in combination.

The product of the present invention comprises: a package comprising a multilayer structure; and a content contained in the package, the content having a sodium chloride content of 1% by mass or more, wherein the multilayer structure comprises: a barrier layer (A) comprising an EVOH (a) as a main component; an inorganic vapor-deposited layer (B) laminated on the barrier layer (A), the inorganic vapor-deposited layer (B) having an average thickness of 7 nm or more and 100 nm or less; and a heat-sealing layer (E) which is an outermost layer on a side opposite to a side of the barrier layer (A) on which the inorganic vapor-deposited layer (B) is laminated, the heat-sealing layer (E) comprising a polyolefin (e) as a main component, wherein a total average thickness of layers comprising a polyolefin resin as a main component and being laminated on a side opposite to a side of the barrier layer (A) on which the inorganic vapor-deposited layer (B) is laminated is 45 µm or more, and the heat-sealing layer (E) is positioned on an inner surface side of the package. Here, the barrier layer (A) and the inorganic vapor-deposited layer (B) may be directly laminated, or may be laminated via an other layer such as an adhesive layer. In addition, the heat-sealing layer (E) which is an outermost layer in the multilayer structure, as referred to, means that the heat-sealing layer (E) is exposed. Furthermore, "a total average thickness of layers comprising a polyolefin resin as a main component and being laminated on a side opposite to a side of the barrier layer (A) on which the inorganic vapor-deposited layer (B) is laminated is 45 µm or more" as referred to herein means that, of layers laminated on a side opposite to a side of the barrier layer (A) on which the inorganic vapor-deposited layer (B) is laminated, a total average thickness of each layer comprising a polyolefin resin as a main component is 45 µm or more, and a feature of comprising other layer (s) on a side opposite to a side of the barrier layer (A) on which the inorganic vapor-deposited layer (B) is laminated is not excluded.

Owing to having the comprising the EVOH (a) as a main component, the multilayer structure in the product of the present invention tens to be superior in gas barrier properties while maintaining recyclability. In addition, owing to the inorganic vapor-deposited layer (B) having an average thickness of 7 nm or more and 100 nm or less being laminated on the barrier layer (A), the gas barrier properties tend to be superior. Moreover, owing to the feature that the total average thickness of layers comprising a polyolefin resin as a main component and being laminated on a side opposite to a side of the barrier layer (A) on which the inorganic vapor-deposited layer (B) is laminated is 45 µm or more, even in a case in which the package has, inside thereof, a content with 1% by mass or more sodium chloride, inhibiting deterioration of the appearance and the gas barrier properties tends to be enabled.

It is to be noted that the "principal component" as referred to herein means a component that is contained in more than 50% by mass.

As referred to herein, the term "average thickness" of each layer, etc. means an average of thicknesses measured at arbitrary five places, unless otherwise specified in particular.

The "ppm" as referred to herein means a content on mass basis (mass ppm).

The "polyethylene" as referred to herein means a homopolymer of ethylene, a copolymer of 80 mol% or more of ethylene and 20 mol% or less of an α-olefin monomer, and a copolymer of 90 mol% or more of ethylene and less than 10 mol% of a non-olefin monomer containing no atom other than a carbon atom, an oxygen atom, and a hydrogen atom in the functional group.

The "polypropylene" as referred to herein means a homopolymer of propylene, a copolymer of 80 mol% or more of propylene and 20 mol% or less of an α-olefin monomer, and a copolymer of 90 mol% or more of propylene and less than 10 mol% of a non-olefin monomer containing no atom other than a carbon atom, an oxygen atom, and a hydrogen atom in the functional group.

The "acid-modified polyethylene" as referred to herein means a polymer obtained by modifying polyethylene with an acid. The acid-modified polyethylene may be a polymer obtained by introducing at least one of an acidic group and an acidic anhydride group into the polyethylene.

The "acid-modified polypropylene" as referred to herein means a polymer obtained by modifying polypropylene with an acid. The acid-modified polypropylene may be a polymer obtained by introducing at least one of an acidic group and an acidic anhydride group into the polypropylene.

The "polyolefin" as referred to herein means: a homopolymer or a copolymer of one type or two or more types of α-olefin monomer; and a copolymer of 90 mol% or more one type or two or more types of α-olefin monomer with less than 10 mol% a non-olefin monomer containing no atom other than a carbon atom, an oxygen atom, and a hydrogen atom in the functional group.

The "acid-modified polyolefin" as referred to herein means a polymer obtained by modifying polyolefin with an acid. The acid-modified polyolefin may be a polymer obtained by introducing at least one of an acidic group and an acidic anhydride group into the polyolefin.

The "polyolefin resin" as referred to herein means the polyolefin and a modified polyolefin (such as the acid-modified polyolefin). The modified polyolefin as referred to herein means a polymer obtained by modifying the polyolefin.

Furthermore, as referred to herein, the "surface (or outer layer)" of the multilayer film or the multilayer structure means an exposed face, not in the sense of distinguishing between the front and the back. In other words, the multilayer film and the multilayer structure each have two surfaces. Similarly, the multilayer film and the multilayer structure each have two outermost layers.

It is to be noted that "consisting substantially only of" as referred to herein means that optional component(s) is/are permitted to be contained within a range not influencing the effects of the present invention, and "consisting only of" as referred to herein means that optional component(s) other than impurities which are inevitably contained is/are excluded.

In addition, herein, numerical value ranges described using "to" mean that numerical values before and after "to" are included as the lower limit value and the upper limit value, respectively.

### Barrier Layer (A)

The multilayer structure in the product of the present invention becomes favorable in gas barrier properties, owing to comprising the barrier layer (A) comprising the EVOH (a) as a main component. In addition, the barrier layer (A) is favorable in affinity with the inorganic vapor-deposited layer (B) as described later; therefore, in the case in which the inorganic vapor-deposited layer (B) is directly laminated on the barrier layer (A), more favorable gas barrier properties can be exhibited and in particular, maintaining gas barrier properties tends to be enabled even when physical stress by flexion or the like is applied. It is to be noted that a plurality of the barrier layers (A) may be provided.

The EVOH (a) is typically obtained by saponifying an ethylene-vinyl ester copolymer obtained by polymerizing ethylene and a vinyl ester. An ethylene unit content of the EVOH (a) is preferably 10 mol% or more and 65 mol% or less, more preferably 20 mol% or more and 60 mol%, and still more preferably 25 mol% or more and 55 mol% or less. When the ethylene unit content of the EVOH (a) is 10 mol% or more, melt formability of the EVOH (a) may improve. Also, when the ethylene unit content of the EVOH (a) is 65 mol% or less, the gas barrier properties of the multilayer structure in the product of the present invention may improve. The ethylene unit content as referred to herein is a content (mol%) of an ethylene unit with respect to total monomer units constituting the EVOH.

The degree of saponification of the EVOH (a) is preferably 90 mol% or more. The degree of saponification as referred to herein means a proportion of the number of vinyl alcohol units with respect to a total number of vinyl alcohol units and vinyl ester units in the EVOH (a). The degree of saponification of the EVOH (a) is preferably 95 mol% or more, more preferably 99 mol% or more, and still more preferably 99.9 mol% or more. When the degree of saponification is 90 mol% or more, the gas barrier properties of the multilayer structure in the product of the present invention tend to improve. The upper limit of the degree of saponification of the EVOH (a) may be 100 mol%. The ethylene unit content and the degree of saponification of the EVOH (a) are determined by ¹H-NMR measurement.

The EVOH (a) may be a mixture of two or more types of EVOHs having different ethylene unit contents. In this case, the difference of the ethylene unit contents of the EVOHs whose difference of the ethylene unit contents is the largest is preferably 30 mol% or less, more preferably 20 mol% or less, and still more preferably 15 mol% or less, and may be 3 mol% or more. Similarly, the EVOH (a) may be a mixture of two or more types of EVOHs having different degrees of saponification. In this case, the difference of the degrees of saponification of the EVOHs whose difference of the degrees of saponification is the largest is preferably 7 mol% or less, and more preferably 5 mol% or less, and may be 0.5 mol% or more.

The EVOH (a) may contain other monomer unit aside from the ethylene unit, the vinyl ester unit, and the vinyl alcohol unit, within a range not leading to impairment of the effects of the present invention. In particular, introducing a modifying group containing a primary hydroxy group having a specific structure may result in cases in which forming processibility and gas barrier properties of the EVOH (a) can be both achieved at high levels. A content of the other monomer unit is preferably 5% by mass or less, more preferably 3% by mass or less, still more preferably 1% by mass or less, and particularly preferably the other monomer unit is substantially not contained. Examples of the other monomer include: alkenes such as propylene, butylene, pentene, and hexene; alkenes having an ester group such as 3-acyloxy-1-propene, 3-acyloxy-1-butene, 4-acyloxy-1-butene, 3,4-diacyloxy-1-butene, 3-acyloxy-4-methyl-1-butene, 4-acyloxy-2-methyl-1-butene, 4-acyloxy-3-methyl-1-butene, 3,4-diacyloxy-2-methyl-1-butene, 4-acyloxy-1-pentene, 5-acyloxy-1-pentene, 4,5-diacyloxy-1-pentene, 4-acyloxy-1-hexene, 5-acyloxy-1-hexene, 6-acyloxy-1-hexene, 5,6-diacyloxy-1-hexene, and 1,3-diacetoxy-2-methylenepropane, and saponified products thereof; unsaturated acids such as acrylic acid, methacrylic acid, crotonic acid, and itaconic acid, and anhydrides, salts, mono- or dialkyl esters, and the like thereof; nitriles such as acrylonitrile and methacrylonitrile; amides such as acrylamide and methacrylamide; olefin sulfonic acids such as vinylsulfonic acid, allylsulfonic acid, and methallylsulfonic acid, and salts thereof; vinylsilane compounds such as vinyltrimethoxysilane, vinyltriethoxysilane, vinyltri(β-methoxy-ethoxy)silane, and γ-methacryloxypropylmethoxysilane; alkyl vinyl ethers; vinyl ketone; N-vinylpyrrolidone; vinyl chloride; vinylidene chloride; and the like.

The EVOH (a) may be subjected to post-modification by a process such as urethanization, acetalization, cyanoethylation, oxyalkylenation, or the like.

The melt flow rate (MFR) (at 210 °C, under a load of 2.16 kg) of the EVOH (a), as measured in accordance with JIS K7210 (2014) is preferably 0.2 to 30 g/10 min. The MFR of the EVOH (a) is more preferably 1.0 g/10 min or more, still more preferably 5.0 g/10 min or more, and particularly preferably 10 g/10 min or more. On the other hand, the MFR of the EVOH (a) is more preferably 25 g/10 min or less, and still more preferably 20 g/10 min or less.

### Other compound

The barrier layer (A) may contain other compound(s) aside from the EVOH (a), within the range not leading to impairment of the effects of the present invention. Examples of the other compound include carboxylic acid compounds, phosphoric acid compounds, boron compounds, metal salts (alkali metal salts, alkaline earth metal salts, etc.), antioxidants, UV absorbents, plasticizers, lubricants, fillers, antistatic agents, and the like. The content of the other compound in the barrier layer (A) is typically 5% by mass or less, preferably 2% by mass or less, more preferably 1% by mass or less, and still more preferably 0.5% by mass or less. In light of enabling aggregate formation and coloring to be inhibited when ground matter of the multilayer structure comprising the barrier layer (A) is melt formed, an alkali metal ion, a carboxylic acid and/or a phosphoric acid compound is/are preferably contained. Furthermore, by containing the boron compound, melt viscosity of ground matter of the barrier layer (A) and the multilayer structure comprising the barrier layer (A) can be controlled.

The carboxylic acid compound may be a monocarboxylic acid or a polyhydric carboxylic acid, or may be a combination thereof. The carboxylic acid compound may be an ion, and such a carboxylic acid ion may form a salt with a metal ion. A content of the carboxylic acid and carboxylic acid ion in the barrier layer (A) is preferably 50 to 400 ppm. As the carboxylic acid compound, for example, an aliphatic carboxylic acid such as acetic acid or stearic acid, and/or the like may be suitably used. When the barrier layer (A) contains the carboxylic acid compound, preventing the coloring during melt forming tends to be enabled.

The phosphoric acid compound is not particularly limited, and various types of acids such as phosphoric acid and phosphorous acid, salts thereof, and the like can be used. The phosphoric acid salt may be contained in any form of a monobasic phosphoric acid salt, a dibasic phosphoric acid salt, and a tribasic phosphoric acid salt, and a monobasic phosphoric acid salt is preferred. Also, the cation species thereof is not particularly limited, and an alkali metal salt is preferred. Of these, sodium dihydrogen phosphate and potassium dihydrogen phosphate are preferred. In the case in which the barrier layer (A) comprises the phosphoric acid compound, a content of the phosphoric acid compound in the barrier layer (A) is preferably 5 to 100 ppm in terms of phosphoric acid radical equivalent. When the content of the phosphoric acid compound is 5 ppm or more, coloring resistance during melt forming tends to be favorable. On the other hand, when the content of the phosphoric acid compound is 100 ppm or less, melt formability tends to be favorable.

The boron compound is not particularly limited, and is exemplified by boric acids, boric acid esters, boric acid salts, boron hydrides, and the like. Specifically, examples of boric acids include orthoboric acid, metaboric acid, tetraboric acid, and the like, examples of boric acid esters include triethyl borate, trimethyl borate, and the like, and examples of boric acid salts include alkali metal salts and alkaline earth metal salts of various types of boric acids described above, as well as borax, and the like. Of these compounds, orthoboric acid (hereinafter, may be merely referred to as "boric acid") is preferred. In the case in which the barrier layer (A) comprises the boron compound, a content of the boron compound in the barrier layer (A) is preferably 50 to 400 ppm in terms of boron element equivalent. When the content of the boron compound is 50 ppm or more, inhibiting torque fluctuation during heat melting tends to be enabled. On the other hand, when the content of the boron compound is 400 ppm or less, formability tends to be maintained.

The cation species of the alkali metal salt is not particularly limited, and a sodium salt or a potassium salt is suitable. The anion species of the alkali metal salt is also not particularly limited. A carboxylate, a carbonate, a bicarbonate, a phosphate, a hydrogen phosphates, a borate, a hydroxide may be employed. In the case in which the barrier layer (A) comprises the alkali metal salt, a content of the alkali metal salt in the barrier layer (A), in terms of metal element equivalent, is preferably 40 to 500 ppm. When the content of the alkali metal salt is 40 ppm or more, interlayer adhesiveness tends to improve. On the other hand, when the content of the alkali metal salt is 500 ppm or less, melt stability tends to be superior.

The cation species of the alkaline earth metal salt is not particularly limited, and a magnesium salt or a calcium salts is suitable. The anion species of the alkaline earth metal salt is also not particularly limited. A carboxylate, a carbonate, a bicarbonate, a phosphate, a hydrogen phosphates, a borate, a hydroxide may be employed. A content of the alkaline earth metal salt in the barrier layer (A) is preferably 10 to 300 ppm. When the barrier layer (A) comprises the alkaline earth metal salt, inhibiting deterioration during repeated melt forming of a molded product and inhibiting generation of degradation products such as gels tend to be enabled. Alternatively, a multivalent metal salt such as a zinc salt may be preferably used in place with the alkaline earth metal salt.

Examples of the antioxidants, UV absorbents, plasticizers, lubricants, fillers and antistatic agents which may be used include the following substances, and the like.

Antioxidants: 2,5-di-t-butylhydroquinone, 2,6-di-t-butyl-p-cresol, 4,4'-thiobis(6-t-butylphenol), 2,2'-methylene-bis(4-methyl-6-t-butylphenol), octadecyl-3-(3',5'-di-t-butyl-4'-hydroxyphenyl)propionate, 4,4'-thiobis(6-t-butylphenol), and the like.

UV absorbents: ethylene-2-cyano-3,3'-diphenyl acrylate, 2-(2'-hydroxy-5'-methylphenyl)benzotriazole, 2-(2'-hydroxy-3'-t-butyl-5'-methylphenyl)5-chlorobenzotriazole, 2-hydroxy-4-methoxybenzophenone, 2,2'-dihydroxy-4-methoxybenzophenone, 2-hydroxy-4-octoxybenzophenone, and the like.

Plasticizers: dimethyl phthalate, diethyl phthalate, dioctyl phthalate, waxes, liquid paraffins, phosphoric acid esters, and the like.

Lubricants: stearamide, oleamide, erucamide, behenamide, ethylene bis(stearamide), methylol stearamide, N-oleylpalmitamide, N-stearylerucamide, liquid paraffins, natural paraffins, synthetic paraffins, polyolefin waxes, stearyl alcohol, lauryl alcohol, stearic acid, lauric acid, myristic acid, behenic acid, montanic acid, stearyl stearate, stearyl laurate, calcium stearate, magnesium stearate, zinc stearate, lead stearate, and the like.

Fillers: glass fibers, asbestos, ballastinite, calcium silicate, and the like.

Antistatic agents: glycerin mono-fatty acid esters, fatty acid diethanolamides, alkyl diethanolamines, alkyl sulfonates, alkylbenzenesulfonates, alkyltrimethylammonium salts, alkylbenzyl dimethylammonium salts, alkyl betaines, alkylimidazolium betaines, and the like.

The barrier layer (A) may further comprise a thermoplastic resin other than the EVOH (a). Examples of the thermoplastic resin other than the EVOH (a) include various types of polyolefin (polyethylene, polypropylene, poly-1-butene, poly-4-methyl-1-pentene, ethylene-propylene copolymers, copolymers of ethylene and α-olefin having 4 or more carbon atoms, copolymers of a polyolefin and maleic anhydride, ethylene-vinyl ester copolymers, ethylene-acrylic acid ester copolymers, or modified polyolefins obtained by grafting the same with an unsaturated carboxylic acid or a derivative thereof, etc.), various types of polyamides (nylon 6, nylon 6,6, nylon 6/66 copolymer, nylon 11, nylon 12, poly(metaxylylene adipamide), etc.), various types of polyesters (polyethylene terephthalate, polybutylene terephthalate, polyethylene naphthalate, etc.), polyvinyl chloride, polyvinylidene chloride, polystyrene, polyacrylonitrile, polyurethane, polycarbonate, polyacetal, polyacrylate, modified polyvinyl alcohol resins, and the like. A content of the thermoplastic resin in the barrier layer (A) is typically less than 40% by mass, preferably less than 30% by mass, more preferably less than 20% by mass, still more preferably less than 10% by mass, or may be less than 5% by mass or less than 1% by mass, and particularly preferably, the thermoplastic resin is not substantially contained.

A proportion of the EVOH (a) in the resin constituting the barrier layer (A) is, in light of the effects of the invention to be more prominently achieved, preferably 60% by mass or more, more preferably 70% by mass or more, still more preferably 80% by mass, even more preferably 90% by mass or more, particularly preferably 95% by mass or more, or may be 98% by mass or more or 99% by mass or more, and the resin constituting the barrier layer (A) may be substantially only the EVOH (a). In addition, a proportion accounted for by the EVOH (a) in the barrier layer (A) is, in light of the effects of the invention to be more prominently achieved, preferably 60% by mass or more, more preferably 70% by mass or more, still more preferably 80% by mass, even more preferably 90% by mass or more, particularly preferably 95% by mass or more, or may be 98% by mass or more or 99% by mass or more, and the barrier layer (A) may be constituted with substantially only the EVOH (a). The upper limit of the proportion accounted for by the EVOH (a) in the barrier layer (A) may be 100% by mass.

The barrier layer (A) is preferably stretched in at least one direction. More specifically, it is preferred that the barrier layer (A) is uniaxially stretched or biaxially stretched. In the case in which the barrier layer (A) is a stretched layer, particularly in the case of being a biaxially stretched layer, favorable gas barrier properties can be achieved even with a relatively thin barrier layer (A).

In the case in which the barrier layer (A) is a stretched layer, for example. to be stretched in at least uniaxial direction at a draw ratio of 2 or more and less than is preferred, and to be stretched in at least uniaxial direction at a draw ratio of 3 or more and less than 6 is more preferred. Alternatively, the barrier layer (A) is preferably stretched in a twin-screw direction at each draw ratio of 2 or more and less than 12, and more preferably stretched in a twin-screw direction at each draw ratio of 3 or more and less than 6.

The lower limit of the average thickness of the barrier layer (A) is preferably 0.1 µm, and more preferably 0.3 µm. When the average thickness of the barrier layer (A) is equal to or more than the lower limit, enhancing the gas barrier properties, and the like, is enabled. The upper limit of the average thickness of the barrier layer (A) is preferably 20 µm, more preferably 15 µm, or may be 10 µm, 5 µm, 3 µm, 2 µm, or 1 µm. When the average thickness of the barrier layer (A) is equal to or less than the upper limit, contemplating film thinning and reduction in weight of the multilayer structure, and the like, is enabled.

An oxygen transmission rate of the barrier layer (A) is preferably 50 mL·20 µm/(m²·day·atm) or less, more preferably 10 mL·20 µm/(m²·day·atm) or less, still more preferably 5 mL·20 µm/(m²·day·atm) or less, and particularly preferably 1 mL·20 µm/(m²·day·atm) or less. Here, the oxygen transmission rate is a value measured under a condition involving 20 °C and 65% RH, in accordance with a method described in ISO14663-2 Annex C (1999).

The barrier layer (A) may be configured with a single layer, or may be configured with a plurality of layers.

For the barrier layer (A), a resin film can be used. A method for producing the resin film having the barrier layer (A) is not particularly limited, and examples include a melt method, a solution method, a calendar method, and the like, among which the melt method is preferred. Examples of the melt method include a cast method and an inflation method, and of these, the cast method is preferred. Furthermore, a stretched film stretched by a known method can also be used.

A method for producing the resin composition that is a material for film formation of the barrier layer (A) is not particularly limited, and the resin composition can be produced by melt kneading the EVOH (a) and other component(s) acid (e) as needed. Each component may be blended in a solid state such as powder or as a molten material, or may be blended as a solute contained in a solution or a dispersoid contained in a dispersion. As the solution and the dispersion, an aqueous solution and an aqueous dispersion are suitable, respectively. For the melt kneading, a mixing device or a kneading device that is known such as a kneader ruder, an extruder, a mixing roll, or a Banbury mixer can be used, for example. A temperature range during the melt kneading can be appropriately adjusted depending on, e.g., melting points of the EVOH (a) and/or each component to be used; 150 to 250 °C are typically used. Alternatively, the EVOH (a) may be produced by adding some components to the EVOH (a) beforehand, and then melt kneading additionally-required other component(s) as described above. In a method for adding some components to the EVOH (a) beforehand, the EVOH (a) as pellets or powder is immersed into a solution in which added components have been dissolved.

### Inorganic vapor-deposited layer (B)

The multilayer structure in the product of the present invention comprises an inorganic vapor-deposited layer (B) that is laminated on the barrier layer (A) and has an average thickness of 7 nm or more and 100 nm or less. Here, another layer such as an adhesive layer may be provided between the barrier layer (A) and the inorganic vapor-deposited layer (B), or they may be directly laminated, and it is preferred that the barrier layer (A) and the inorganic vapor-deposited layer (B) are directly laminated. Due to the inorganic vapor-deposited layer (B) being provided on the barrier layer (A), exhibiting favorable barrier properties tends to be enabled. The inorganic vapor-deposited layer (B) can be formed by vapor deposition with an inorganic substance. Examples of the inorganic substance include metals (e.g., aluminum), metal oxides (e.g., silicon oxide, aluminum oxide), metal nitrides (e.g., silicon nitride), metal oxynitride (e.g., acid silicon nitride), or metal carbonitrides (e.g., silicon carbonitride), and the like. In particular, the inorganic vapor-deposited layer (B) formed of aluminum, aluminum oxide, silicon oxide, magnesium oxide, or silicon nitride is preferred in light of industrial productivity, and the inorganic vapor-deposited layer (B) composed of aluminum, aluminum oxide, or silicon oxide is more preferred. In a case in which light-shielding properties are to be imparted as a packaging material, being composed of aluminum is preferred. In light of visibility of the contents as a packaging material and suitability for microwave ovens, being composed of aluminum oxide or silicon oxide is preferred. It is to be noted that even in the case of a metal vapor-deposited layer of aluminum, irreversible oxidation may occur, and aluminum oxide may be partially included. In the case in which the metal vapor-deposited layer partially comprises aluminum oxide, a ratio (O mol/Al mol), the amount of substance of oxygen atoms (O mol) to the amount of substance of aluminum atoms (Al mol) constituting the metal vapor-deposited layer, is preferably 0.5 or less, more preferably 0.3 or less, still more preferably 0.1 or less, and particularly preferably 0.05 or less.

A method for forming the inorganic vapor-deposited layer (B) is not particularly limited, and examples of the method include physical vapor deposition (PVD) methods such as a vacuum deposition method (e.g., resistance heating deposition, electron beam deposition, molecular beam epitaxy, etc.), a sputtering method, and an ion plating method; and chemical vapor deposition (CVD) methods such as a thermal chemical vapor deposition method (e.g., catalytic chemical vapor deposition), a photochemical vapor deposition method, plasma enhanced chemical vapor deposition method (e.g., capacitively coupled plasma, inductively coupled plasma, surface wave plasma, electron cyclotron resonance, dual magnetron, atomic layer deposition, etc.), and a metal organic chemical vapor deposition method.

The average thickness of the inorganic vapor-deposited layer (B) is 7 nm or more and 100 nm or less. The average thickness of the inorganic vapor-deposited layer (B) is preferably 15 nm or more, and more preferably 30 nm or more. The average thickness of the inorganic vapor-deposited layer (B) is preferably 80 nm or less, and more preferably 70 nm or less. It is to be noted that the average thickness of the inorganic vapor-deposited layer (B) as referred to herein means an average value of the thicknesses at arbitrary ten points on the cross-section of the inorganic vapor-deposited layer (B) as measured by an electron microscope.

In the case in which the inorganic vapor-deposited layer (B) is composed of aluminum, a molar ratio (Al/Al(OH)₃), aluminum to aluminum hydroxide, at a central part in the depth direction (thickness direction) of the inorganic vapor-deposited layer (B), as measured by a TEM-EDS device, is preferably 1.1 or more, more preferably 1.5 or more, still more preferably 2.0 or more, and particularly preferably 2.5 or more, or may be 2.6 or more. It is preferred that the molar ratio falls within the above range even after a storage test described in Examples (storage at 43 °C, 50% RH for 200 days). When the molar ratio falls within the above range, favorably maintaining the appearance and oxygen barrier properties tends to be enabled. It is to be noted that aluminum hydroxide is considered to be generated by the corrosion of aluminum or aluminum oxide due to the influence of sodium chloride. moisture, etc., and thus the above molar ratio can be used as an marker indicating the degree of such corrosion.

### Heat-Sealing Layer (E)

The multilayer structure in the product of the present invention has a heat-sealing layer (E) that is an outermost layer on a side opposite to a side of the barrier layer (A) on which the inorganic vapor-deposited layer (B) is laminated. Furthermore, in the multilayer structure, a total average thickness of layers, which are laminated on a side opposite to a side of the barrier layer (A) on which the inorganic vapor-deposited layer (B) is laminated and which comprise a polyolefin resin as a main component, is 45 µm or more. Here, the case in which the total average thickness of layers, which comprise a polyolefin resin as a main component and which are laminated on the side opposite to the side of the barrier layer (A) on which the inorganic vapor-deposited layer (B) is laminated, is 45 µm or more is exemplified by: a case in which the average thickness of the heat-sealing layer (E) is 45 µm or more; a case in which a polyolefin layer (D) described later is provided between the heat-sealing layer (E) and the barrier layer (A), and a total of the average thickness of the polyolefin layer (D) and the average thickness of the heat-sealing layer (E) is 45 µm or more; and the like. Due to thus providing the layer comprising a polyolefin resin as a main component and having a certain thickness or more on the inner side (heat-sealing layer (E) side) than the barrier layer (A) (EVOH layer), inhibiting deterioration of the appearance and the gas barrier properties tends to be enabled even when the product comprising a content with 1% by mass or more sodium chloride is stored. Although the reason for this feature is not certain, when the average thickness of the polyolefin resin layer on the inner sided (heat-sealing layer (E) side) than the barrier layer (A) is less than 45 µm, the inorganic vapor-deposited layer (B) is affected by the content and thus the gas barrier properties and appearance tend to be deteriorated, which is presumed to be an influence from the barrier layer (A) being a hydrophilic resin. In other words, with an existing problem in achieving both superior gas barrier properties and maintenance of the gas barrier properties when storing specific contents, i.e., adopting a configuration in which the inorganic vapor-deposited layer (B) is laminated on the barrier layer (A) is desired to achieve superior barrier properties, but on the other hand, inhibiting the deterioration of the inorganic vapor-deposited layer (B) by the contents is difficult, the present inventors investigated to solve such a problem, whereby the present invention was accomplished.

Examples of the polyolefin (e) contained in the heat-sealing layer (E) as a main component include polyethylene (linear low-density polyethylene, low-density polyethylene, medium-density polyethylene, high-density polyethylene, etc.), ethylene-propylene copolymers, polypropylene, propylene-a-olefin (α-olefin having 4 to 20 carbon atoms) copolymers, and homopolymers or copolymers of olefins such as polybutene and polypentene. Among these, polyethylene or polypropylene is preferred, and polypropylene is more preferred. One type or two or more types of the polyolefin may be used.

In the heat-sealing layer (E), a proportion accounted for by the polyolefin (e) is 60% by mass or more, more preferably 70% by mass or more, still more preferably 80% by mass or more, even more preferably 90% by mass or more, and particularly preferably 95% by mass or more, or may be 98% by mass or more, or 99% by mass or more. The upper limit of the proportion accounted for by the polyolefin (e) in the heat-sealing layer (E) may be 100% by mass.

The heat-sealing layer (E) may be an unstretched layer, or may be a stretched layer, and in light of heat sealing property to be favorable, the heat-sealing layer (E) is preferably an unstretched layer.

The lower limit of the average thickness of the heat-sealing layer (E) is preferably 20 µm, more preferably 30 µm, and still more preferably 40 µm. When the average thickness of the heat-sealing layer (E) is equal to or more than the lower limit, inhibiting deterioration of the appearance and gas barrier properties tends to be enabled even after storage of the product of the present invention. The upper limit of the average thickness of the heat-sealing layer (E) is preferably 200 µm, more preferably 150 µm, and still more preferably 100 µm. When the average thickness of the heat-sealing layer (E) is equal to or less than the upper limit, contemplating film thinning of the multilayer structure, and the like, is enabled.

The heat-sealing layer (E) may be configured with a single layer, or with a plurality of layers.

The multilayer structure in the product of the present invention may comprise an adhesion layer (C) comprising an adhesive resin (c) as a main component, and a polyolefin layer (D) comprising a polyolefin (d) as a main component. Also, the multilayer structure may have a layer configuration in which the inorganic vapor-deposited layer (B), the barrier layer (A), the adhesion layer (C), the polyolefin layer (D), and the heat-sealing layer (E) are laminated in this order. Another layer (e.g., adhesive layer described later) and/or the like may be provided between each layer, and it is preferred that each layer is directly laminated. When the multilayer structure has such a layer configuration, deterioration of the appearance and the gas barrier properties can be more inhibited even after storage of the product of the present invention, and recyclability of the package tends to improve.

### Adhesion Layer (C)

In light of the multilayer structure superior in the appearance to be obtained, and the like, the multilayer structure in the product of the present invention may also have an adhesion layer (C) comprising an adhesive resin (c) as a main component. The adhesive resin (c) is preferably an acid-modified polyolefin, and more preferably a carboxylic acid-modified polyolefin obtained by graft polymerization of an unsaturated carboxylic acid such as maleic anhydride, or a derivative thereof, to a polyolefin, or the like. The melting point of the adhesive resin (c) primarily depends on the polyolefin before modification with the carboxylic acid. In regard to the polyolefin, details regarding the polyolefin (e) described above can be applied thereto as the are. The adhesive resin (c) is preferably acid-modified polyethylene or acid-modified polypropylene, and more preferably acid-modified polypropylene. It is to be noted that in the case in which the adhesive resin (c) that is the main component of the adhesion layer (C) is the acid-modified polyolefin, the adhesion layer (C) serves as a layer comprising a polyolefin resin as a main component.

A proportion accounted for by the acid-modified polyolefin in the adhesive resin (c) is preferably 70% by mass or more, more preferably 80% by mass or more, and still more preferably 95% by mass or more, or the adhesive resin (c) may be constituted with substantially only the acid-modified polyolefin. Moreover, a proportion accounted for by the adhesive resin (c) in the adhesion layer (C) is preferably 70% by mass or more, more preferably 80% by mass or more, and still more preferably 95% by mass or more, or may be 97% by mass or more or 99% by mass or more, or the adhesion layer (C) may be constituted with substantially only the adhesive resin (c). The upper limit of the proportion accounted for by the adhesive resin (c) in the adhesion layer (C) may be 100% by mass.

### Polyolefin Layer (D)

The multilayer structure in the product of the present invention may comprise a polyolefin layer (D) in light of enhancement of water vapor barrier properties and flex resistance, and in light of inhibition of deterioration of the appearance and the gas barrier properties of the product of the present invention after storage.

The polyolefin layer (D) comprises a polyolefin (d) as a main component. As the polyolefin (d), one similar to those described above as the polyolefin (e) can be used, and a suitable mode is also similar to a suitable mode of the polyolefin (e) described above.

The content of the polyolefin (d) in the polyolefin layer (D) is preferably 80% by mass or more, more preferably 90% by mass or more, and still more preferably 97% by mass or more, or may be 99% by mass or more. The upper limit of the content of the polyolefin (d) in the polyolefin layer (D) may be 100% by mass.

The polyolefin layer (D) may be an unstretched layer, or may be a stretched layer, and in light of deterioration of the appearance and the gas barrier properties to be more inhibited when a content comprising sodium chloride is stored, the polyolefin layer (D) is preferably stretched in at least a uniaxial direction, and more preferably stretched in a twin-screw direction.

The lower limit of the average thickness per layer of the polyolefin layer (D) is preferably 1 µm, and more preferably 5 µm. When the average thickness of the polyolefin layer (D) is equal to or more than the lower limit, sufficient moisture-proof properties and the like can be exhibited. The upper limit of the average thickness per layer of the polyolefin layer (D) is preferably 100 µm, more preferably 50 µm, and still more preferably 40 µm, or may be 30 µm. When the average thickness of the polyolefin layer (D) is equal to or less than the upper limit, contemplating film thinning of the multilayer structure, and the like, is enabled.

The polyolefin layer (D) may be configured with a single layer, or may be configured with a plurality of layers.

In the multilayer structure in the product of the present invention, the polyolefin layer (D') may be provided on an outermost layer on a side opposite to the heat-sealing layer (E). In the case in which the multilayer structure is provided with the polyolefin layer (D') on the outermost layer, the polyolefin layer (D') is preferably a stretched layer, in light of an increase in the difference of the melting point from that of the heat-sealing layer (E) to make the heat sealing property favorable. The polyolefin layer (D') is a layer comprising a polyolefin as a main component. Specific modes and suitable modes of the polyolefin contained in the polyolefin layer (D') and the average thickness of the polyolefin layer (D') are similar to the specific modes and suitable modes of the polyolefin (d) contained in the polyolefin layer (D) and the average thickness of the polyolefin layer (D), described above. Note that the polyolefin (d) contained in the polyolefin layer (D) and the polyolefin contained in the polyolefin layer (D') may be the same or different. In addition, the average thickness of the polyolefin layer and the average thickness of the polyolefin layer (D') may be the same or different.

The adhesion layer (C), the polyolefin layer (D), the polyolefin layer (D'), and the heat-sealing layer (E) may contain, within a range not leading to impairment of the effects of the present invention, other components such as an antioxidant, a plasticizer, a thermal stabilizer (a melt stabilizer), a photo initiator, a deodorant, an ultraviolet ray-absorbing agent, an antistatic agent, a lubricant, a colorant, a filler, a desiccant, a filler, a pigment, a dye, a processing aid, a flame retardant, an antifogging agent, and the like. However, the total amount thereof with respect to each layer is less than 50% by mass, preferably less than 40% by mass, more preferably less than 30% by mass, still more preferably less than 20% by mass, and particularly preferably less than 10% by mass, and may be less than 5% by mass, less than 3% by mass, or less than 1% by mass.

The barrier layer (A), the adhesion layer (C), and the polyolefin layer (D) are preferably stretched in at least a uniaxial direction, and more preferably stretched in a twin-screw direction. In such cases, deterioration of the appearance after a storage test can be reduced, and deterioration of oxygen barrier properties after a storage test can be reduced. In the case of being uniaxially stretched, the barrier layer (A), the adhesion layer (C), and the polyolefin layer (D) are, for example, stretched preferably at a draw ratio of two times or more and less than 12 times in at least a uniaxial direction, and more preferably at a draw ratio of three times or more and less than six times in a uniaxial direction. Alternatively, in the case of being biaxially stretched, the barrier layer (A), the adhesion layer (C), and the polyolefin layer (D) are stretched preferably at a draw ratio of two times or more and less than 10 times in an ordinate direction and at a draw ratio of two times or more and less than 15 times in an abscissa direction, and more preferably at a draw ratio of three times or more and less than six times in an ordinate direction and at a draw ratio of six times or more and less than 12 times in an abscissa direction.

It is preferred that the barrier layer (A), the adhesion layer (C), and the polyolefin layer (D) are stretched integrally. For example, the barrier layer (A), the adhesion layer (C), and the polyolefin layer (D) may be formed as a multilayer film laminated in this order, and then stretched.

A method for producing the multilayer film comprising the barrier layer (A), the adhesion layer (C), and the polyolefin layer (D) is not particularly limited, and a coextrusion method is preferred. In other words, the multilayer film comprising the barrier layer (A), the adhesion layer (C), and the polyolefin layer (D) is preferably a coextruded film. A film formation procedure for the coextruded film is not particularly limited, and in general, film formation is executed by a melt forming method to conduct melt extrusion with an extruder.

### Multilayer Structure

The multilayer structure in the product of the present invention comprises the inorganic vapor-deposited layer (B) on the barrier layer (A), and comprises the heat-sealing layer (E) on the outermost surface on the side opposite to the face of the barrier layer (A) having the inorganic vapor-deposited layer (B), and a total average thickness of layers comprising a polyolefin resin as a main component and being laminated on the side opposite to the face of the barrier layer (A) having the inorganic vapor-deposited layer (B) is 45 µm or more. Consequently, in the multilayer structure in the product of the present invention, the inorganic vapor-deposited layer (B) is positioned on the face of the barrier layer (A) opposite to the content. By virtue of having such a configuration, the multilayer structure enables deterioration of the appearance and the gas barrier properties after storage of the product of the present invention to be inhibited.

The total average thickness of layers which comprise a polyolefin resin as a main component and which are laminated on the side opposite to the side of the barrier layer (A) on which the inorganic vapor-deposited layer (B) is laminated is, in light of maintaining the appearance and the gas barrier properties of the product of the present invention after storage at a higher level, preferably 60 µm or more, and more preferably 80 µm or more. The total average thickness may be 150 µm or less, or may be 120 µm or less.

The average thickness of the multilayer structure is, in light of enhancing heat sealing property, preferably 250 µm or less, more preferably 200 µm or less, and still more preferably 150 µm or less. The average thickness of the multilayer structure may be 50 µm or more, or may be 60 µm or more.

The proportion of the average thickness of the barrier layer (A) with respect to the average thickness of the multilayer structure is preferably 5% or less. When the proportion is 5% or less, the recyclability tends to improve. In light of more improving the recyclability, the proportion is preferably 3% or less, and more preferably 2% or less. The proportion may be 0.1% or more.

As a procedure for laminating the heat-sealing layer (E) for the multilayer structure, a well-known method can be used, such as for example, a coextrusion method, an extrusion coating method, or a lamination method. In the case of using the lamination method, an adhesive layer described later may be provided.

The multilayer structure is not particularly limited, and examples of layer configurations are as presented below. It is to be noted that in the following layer configurations: the barrier layer (A) is represented as "A", the inorganic vapor-deposited layer (B) is represented as "B", the heat-sealing layer (E) is represented as "E", the adhesion layer (C) is represented as "C", the polyolefin layer (D) is represented as "D", and the polyolefin layer (D') is represented as "D"; and "/ " denotes being directly laminated, and "//" denotes being laminated via an adhesive layer, or being directly laminated. In a preferred mode, "//" denotes being laminated via an adhesive layer.
(1) B/ A// E
(2) B/ A/ C/ E
(3) B/ A/ C/ D// E
(4) D'// B/ A// E
*(5)* D'// B/ A/ C/ E
(6) D'// B/ A/ C/ D //E

Of these, the configuration D'// B/ A/ C/ D// E is preferred in light of enabling more inhibiting deterioration of the appearance and the gas barrier properties when storing a content containing sodium chloride, while maintaining industrial productivity and recyclability.

It is preferred that the multilayer structure does not comprise a metal layer having an average thickness of 1 µm or more, in light of improving recyclability.

In the multilayer structure, it is preferred that resins serving as main components of the polyolefin layer (D) and the heat-sealing layer (E) are of the same resin species, in light of enhancing recyclability. Here, the same resin species as referred to herein means, for example, that in the case in which the resin contained as a main component in the heat-sealing layer (E) is polypropylene, the resin contained as a main component in the polyolefin layer (D) is also polypropylene. Furthermore, it is also preferred that resins serving as main components of the adhesion layer (C), the polyolefin layer (D), and the heat-sealing layer (E) are of the same resin species in the multilayer structure, in light of enhancing recyclability. In regard to the same resin species, for example, as long as they are polypropylene-based resins (polypropylene or modified polypropylene), they are the same resin species regardless of the presence or absence of modification, differences in average molecular weight, and/or the like. For example, it is preferred the resins serving as main components of that the adhesion layer (C), the polyolefin layer (D), and the heat-sealing layer (E) are all polypropylene-based resins (polypropylene or modified polypropylene).

Moreover, in the multilayer structure, it is preferred that resins serving as main components of the polyolefin layer (D), the polyolefin layer (D'), and the heat-sealing layer (E) are of the same resin species, and it is more preferred that these resins are polypropylene-based resins. Also, it is preferred that resins serving as main components of the adhesion layer (C), the polyolefin layer (D), the polyolefin layer (D'), and the heat-sealing layer (E) are of the same resin species, and it is more preferred that these resins are polypropylene-based resins.

Each layer constituting the multilayer structure may be laminated via an adhesive layer as needed. The adhesive layer can be formed by applying a well-known adhesive agent and drying it. The adhesive agent is preferably a two-component reactive polyurethane-based adhesive agent obtained by mixing a polyisocyanate component with a polyol component and allowing a reaction. The thickness of the adhesive layer is not particularly limited, and is preferably 1 to 5 µm, and more preferably 2 to 4 µm.

The multilayer structure may comprise another layer aside from those described above, within a range not leading to impairment of the effects of the present invention. The another layer is exemplified by a printed layer. The printed layer may be included at any position of the multilayer structure of the present invention, and is preferably located on at least one surface of the barrier layer (A). The printed layer is exemplified by a film obtained by applying and drying a solution containing a pigment or a dye, and, if necessary, a binder resin. A process for applying the printed layer is exemplified by a gravure printing process, and various applying processes using a wire bar, a spin coater, a die coater, or the like. An average thickness of the printed layer is not particularly limited, and is preferably 0.5 to 10 µm, and more preferably 1 to 4 µm.

In addition, the multilayer structure may comprise an inorganic vapor-deposited layer aside from the inorganic vapor-deposited layer (B), but it is preferred that no inorganic vapor-deposited layer is provided on the content side of the barrier layer (A). Due to not comprising an inorganic vapor-deposited layer on the content side of the barrier layer (A), the multilayer structure tends to enable more inhibiting deterioration of the appearance and the gas barrier properties after storage.

### Package

The package in the product of the present invention comprises the multilayer structure, and has the heat-sealing layer (E) on an inner face side. **In** the package, the heat-sealing layer (E) is located on the inner face side, and the heat-sealing layer (E) may be an innermost layer of the package. The package is preferably obtained by heat sealing the heat-sealing layers (E) of the multilayer structure. The package may be formed from the multilayer structure. The package is used for intended usage of wrapping, and the shape thereof is not limited. The package may be in the form of a sheet or formed into a predetermined shape such as a bag.

The package is formed into various forms depending on the intended usage, such as e.g., a vertical form-fill-seal pouch, a spouted pouch, a laminated tube container, or a container lid material.

### Content

The product of the present invention comprises a content which is housed in the package, and has a sodium chloride content of 1% by mass or more. **In** the case in which the content comprises a 1% by mass or more sodium chloride, deterioration of the inorganic vapor-deposited layer (B) tends to be promoted, whereby deterioration of the appearance and the gas barrier properties may be induced; however, by using the multilayer structure, inhibiting the deterioration of the inorganic vapor-deposited layer (B) tends to be enabled.

The sodium chloride content in the content is preferably 5% by mass or less, more preferably 3% by mass or less, and still more preferably 2.5% by mass or less. When the sodium chloride content is 5% by mass or less, inhibiting the deterioration of the appearance and the gas barrier properties after storage of the present product tends to be enabled. The sodium chloride content in the content may be 1.5% by mass or more. When the sodium chloride content in the content is 1.5% by mass or more, the problem to be solved by the present invention becomes more prominent, and thus the effect of inhibiting the deterioration of the appearance and the gas barrier properties by the multilayer structure in the product of the present invention becomes more remarkable.

Furthermore, the content preferably comprises a lipid, since the problem to be solved by the present invention becomes more prominent. In the case in which the content comprises a lipid, the lipid content is preferably 95% by mass or less, 90% by mass or less, and more preferably 80% by mass or less. In the case in which the content comprises a lipid, the lipid content may be 50% by mass or more, or may be 60% by mass or more.

Examples of the lipid include monoglycerides, diglycerides, triglycerides, free fatty acids (oleic acid), sterols, and the like. Among these, triglycerides are more preferred. The triglyceride is preferably a main component of the lipid. The lipid of one type, or two or mores may be included.

The content may be a moisture-containing content. The amount of the moisture is not particularly limited, and is preferably 5% by mass or more, and still more preferably 10% by mass or more. In the case in which the content contains moisture, the amount thereof may be 80% by mass or less, or may be 70% by mass or less.

Examples of the moisture-containing content include: fats and oils such as butter and margarine; seasonings such as sauce, ketchup, and mayonnaise; and the like. These may be in a liquid state, a paste state, or a solid state. The content may be a food product or a beverage product.

The product of the present invention is capable of maintaining the appearance and the gas barrier properties over a long time period, despite comprising the content containing 1% by mass or more sodium chloride. In addition, similar effects can be exhibited even in the case in which the content contains a lipid.

### EXAMPLES

Hereinafter, the present invention is specifically explained by way of Examples, but the present invention is not in anyhow limited to these Examples.

### Evaluation Methods

### (1) Appearance after Storage Test

Each of the pouches (size: 15 cm × 15 cm) obtained in Examples and Comparative Examples was stored using a constant temperature and humidity chamber (Constant Temperature and Humidity Chamber "PR-3J" manufactured by Espec Corp.) under conditions of 43 °C and 50% RH for 200 days. Appearance characteristics of the pouch after 200 days of storage was evaluated in accordance with the following criteria. "D" was assessed to indicate that blooming was not inhibited.

### Determination criteria

A: Almost no change in appearance was observed as compared with before storage.
B: Blooming and discoloration were observed in the range of less than 1/4 of the pouch.
C: Blooming and discoloration were observed in the range of 1/4 or more and less than 1/2 of the pouch.
D: Blooming and discoloration were observed 1/2 or more of the pouch.

### (2) OTR (Oxygen Transmission Rate) after Storage Test

Each of the pouches (size: 15 cm × 15 cm) obtained in Examples and Comparative Examples was stored using a constant temperature and humidity chamber (Constant Temperature and Humidity Chamber "PR-3J" manufactured by Espec Corp.) under conditions of 43 °C and 50% RH for 200 days. After 200 days of storage, the content was removed from the inside of the pouch, then the pouch was washed with water and after wiping off moisture, the center part of the pouch was cut out into a circle with an area of 50 cm², and subjected to moisture conditioning under conditions of 20 °C and 65% RH for one week. Thereafter, an oxygen transmission rate was measured, with the outer layer (the side opposite to the heat-sealing layer (E)) being positioned on an oxygen supply side, and the heat-sealing layer (E) being positioned on a carrier gas side. Specifically, using an oxygen transmission measuring device ("MOCON OX-TRAN2/21", manufactured by Modern Controls Inc.), an oxygen transmission rate (unit: cc/(m²·day·atm)) was measured under the conditions involving: temperature: 20 °C, humidity of the oxygen supply side: 65% RH, humidity of the carrier gas side: 65% RH, oxygen pressure: 1 atm, and carrier gas pressure: 1 atm, and evaluated in accordance with the following criteria. As the carrier gas, a nitrogen gas containing a 2% by volume hydrogen gas was used. "D" was assessed to indicate that inhibition of the gas barrier properties failed.

### Determination criteria

A: 0.1 cc/(m²·day·atm) or more and less than 0.5 cc/(m²·day·atm)
B: 0.5 cc/(m²·day·atm) or more and less than 1 cc/(m²·day·atm)
C: 1 cc/(m²·day·atm) or more and less than 10 cc/(m²·day·atm)
D: 10 cc/(m²·day·atm) or more

### (3) Recyclability

Each of the multilayer structures obtained in Examples and Comparative Examples was ground into a size of 4 mm² or smaller. The ground matter and a polypropylene resin (PP1) were dry-blended at a mass ratio (ground matter/PP1) of 20/80, and monolayer film formation was carried out under the extrusion conditions described below to give a monolayer film having an average thickness of 20 µm. Furthermore, as a control, a monolayer film for control similarly having an average thickness of 20 µm was obtained using only the polypropylene resin.
extruder: single-screw extruder manufactured by Toyo Seiki Seisaku-sho, Ltd. screw diameter: 20 mmφ (L/D = 20, compression ratio = 3.5, full-flight type) extrusion temperatures: C1/ C2/ C3/ D = 190/ 230/ 230/ 230 °C
drawing roll temperature: 80 °C

The monolayer film thus obtained was visually compared with the monolayer film for control, and evaluated in accordance with the following criteria. "D" was assessed to indicate that the recyclability was inferior.

### Determination criteria

A: The amount of aggregates was almost the same as that of the control.
B: The amount of aggregates of 0.5 mm or less was slightly larger than that of the control.
C: The amount of aggregates of 0.5 mm or less was larger than that of the control by 30% or more.
D: The amount of aggregates of more than 0.5 mm was larger than that of the control by 30% or more.

### (4) Molar Ratio of Al to Al (OH)₃ in Inorganic Vapor-Deposited Layer (B)

Each of the pouches (size: 15 cm × 15 cm) obtained in Examples and Comparative Examples was stored using a constant temperature and humidity chamber (Constant Temperature and Humidity Chamber "PR-3J" manufactured by Espec Corp.) under conditions of 43 °C and 50% RH for 200 days. After 200 days of storage, the content was removed and the pouch was washed with water, and thereafter a cross-sectional piece of the pouch was cut out using Ultramicrotome "EM UC7" manufactured by Leica. With respect to a central portion in the depth direction of the inorganic vapor-deposited layer (B) of the cross-sectional piece thus cut out, a mass ratio of aluminum element to oxygen element was measured using a TEM (Transmission Electron Microscope)-EDS (Energy Dispersive X-ray Spectroscopy) device "EX-24063JGT" manufactured by JEOL Ltd. A molar ratio (Al/O) of aluminum element to oxygen element was calculated from this mass ratio, and the Al/Al(OH)₃ molar ratio in the inorganic vapor-deposited layer was calculated based on this molar ratio.

### Materials Used

EVOH1: EVOH (ethylene content: 48 mol%, degree of saponification: 99.9 mol%, MFR (210 °C, 2.16 kg load): 14.8 g/10 min)
PET: PET film ("FE2001" manufactured by Futamura Chemical Co., Ltd., average thickness: 12 µm)
MAhPE: maleic anhydride-modified PE ("Admer (trademark) NF518" manufactured by Mitsui Chemicals, Inc., MFR (190 °C, under load of 2.16 kg): 2.4 g/10 min)
MAhPP: maleic anhydride-modified PP ("Admer (trademark) QF500" manufactured by Mitsui Chemicals, Inc., MFR (230 °C, under load of 2.16 kg): 3.0 g/10 min)
PP1: PP ("Novatec (trademark) PP EA7AD" manufactured by Japan Polypropylene Corporation, density: 0.90 g/cc, MFR (230 °C, under load of 2.16 kg): 1.4 g/10 min). When biaxially stretched in the Examples, it is denoted as BOPP1; and when unstretched, it is denoted as CPP1.
MDOPE: LDPE ("Novatec (trademark) LD LJ400" manufactured by Japan Polypropylene Corporation, density: 0.921 g/cc, MFR (190 °C, under load of 2.16 kg): 1.5 g/10 min). When uniaxially stretched in the MD in Examples, it is denoted as MDOPE. P2161" manufactured by Toyobo Co., Ltd., average thickness: 20 µm)
CPP2: unstretched PP film ("RXC-22" manufactured by Tohcello Co., Ltd., average thickness: 70 µm)
CPP3: unstretched PP film ("RXC-22" manufactured by Tohcello Co., Ltd., average thickness: 50 µm)
CPP4: unstretched PP film (average thickness: 30 µm) formed using a single-screw extruder (GT-32-A, Research Laboratory of Plastics Technology Co., Ltd.) from PP ("NOVATEC (trademark) PP FX4GF" manufactured by Japan Polypropylene Corporation, density: 0.90 g/cc, MFR (230 °C, under load of 2.16 kg): 5.0 g/10 min)
CPP5: unstretched PP film (average thickness: 10 µm) formed using a single-screw extruder (GT-32-A, Research Laboratory of Plastics Technology Co., Ltd.) from PP ("NOVATEC (trademark) PP FX4GF" manufactured by Japan Polypropylene Corporation, density: 0.90 g/cc, MFR (230 °C, under load of 2.16 kg): 5.0 g/10 min)

### Example 1

A coextruded film of three layers each selected from three types (EVOH1/ MAhPP/ PP1 = 4.5 µm/ 4.5 µm/ 180 µm) was formed using EVOH1, PP1, and MahPP under the following conditions.
extruder for EVOH: single-screw extruder (Lab machine ME model CO-EXT, Toyo Seiki Seisaku-sho, Ltd.)
screw for EVOH: opening diameter 20 mmφ, L/D = 20, full-flight screw
extrusion temperatures for EVOH: feeding zone/ compression zone/ metering zone/ die = 175/ 210/ 220/ 230 °C
extruder for MAhPP: single-screw extruder (SZW20GT-20MG-STD, Technovel Corporation)
screw for MAhPP: opening diameter 20 mmφ, L/D = 20, full-flight screw
extrusion temperatures for MAhPP: feeding zone/ compression zone/ metering zone/ die = 150/ 200/ 220/ 230 °C
extruder for PP: single-screw extruder (GT-32-A, Research Laboratory of Plastics Technology Co., Ltd.)
screw for PP: opening diameter 32 mmφ, L/D = 28, full-flight screw
extrusion temperatures for PP: feeding zone/ compression zone/ metering zone/ die = 170/ 220/ 230/ 230 °C
die: 300 mm width, coat hanger die for three layers each selected from three types (manufactured by Research Laboratory of Plastics Technology Co., Ltd.)

The coextruded film thus obtained was stretched three times in the machine direction and three times in the transverse direction at 160 °C using a tenter-type simultaneous biaxial stretching apparatus to give a biaxially stretched coextruded film (EVOH1/ MAhPP/ BOPP1 = 0.5 µm/ 0.5 µm/ 20 µm).

Aluminum was vacuum-deposited onto the surface of EVOH1 of the obtained biaxially stretched coextruded film using "EWA-105" manufactured by ULVAC, Inc., such that the average thickness became 50 nm, whereby a vapor-deposited film having an aluminum vapor-deposited layer (Al/ EVOH1/ MAhPP/ BOPP1 = 50 nm/ 0.5 µm/ 0.5 µm/ 20 µm) was produced. Thus obtained vapor-deposited film was evaluated according to the method described in the evaluation method (4) above. The results are shown in Table 2. Next, a two-component adhesive ("TAKELAC (trademark) A-520" and "TAKENATE (trademark) A-50" manufactured by Mitsui Chemicals, Inc.) was applied and dried on each one face of the biaxially stretched polypropylene film (BOPP2) and the unstretched polypropylene film (CPP2), such that the average thickness after drying became 2 µm to form an adhesive layer (tie), which was laminated with the vapor-deposited film obtained, whereby a multilayer structure (BOPP2/ tie/ Al/ EVOH1/ MAhPP/ BOPP1/ tie/ CPP2 = 20 µm/ 2 µm/ 50 nm/ 0.5 µm/ 0.5 µm/ 20 µm/ 2 µm/ 70 µm) was produced. The multilayer structure thus obtained was evaluated according to the method described in the evaluation method (3) above. The results are shown in Table 2.
average thickness of layers, which comprise a polyolefin resin as a main component, and which are laminated on the side opposite to the side of the barrier layer (A) on which the inorganic vapor-deposited layer (B) was laminated, was 90.5 µm.

The multilayer structure thus obtained was cut out to give two sheets of A4 size (210 mm × 297 mm), which were then overlaid such that CPP2 layers faced each other, and three sides were heat-sealed, whereby a three-side sealed bag (package) was produced. Next, mayonnaise was prepared by mixing edible oil, vinegar, egg, and dietary salt. The mayonnaise thus obtained contained 1.9% by mass sodium chloride, 75% by mass lipid, and 15% by mass moisture. 50 g of the obtained mayonnaise was filled into the three-side sealed bag through the opening, and the opening was heat-sealed, whereby a pouch (product) filled with the content was produced. The pouch thus obtained was evaluated on the appearance and the OTR (oxygen barrier properties) after the storage test according to the methods described in evaluation methods (1) and (2) above. The results are shown in Table 2.

### Examples 2 to 4, 12, 14, Comparative Examples 1, 2, 4

Multilayer structures and pouches were produced and evaluated in a similar manner to Example 1 except that the type and average thickness of the inorganic vapor-deposited layer (B), the average thickness of the polyolefin (PO) layer (D), the type and average thickness of the heat sealing (E), and the layer configuration were changed as presented in Table 1. The results are shown in Table 2. It is to be noted that in Example 3 and Example 14, the evaluation described in the evaluation method (4) above was not performed.

### Example 5

A multilayer structure and a pouch were produced and evaluated in a similar manner to Example 1 except that a uniaxially stretched coextruded film produced under the following conditions was used in place of the biaxially stretched coextruded film. The results are shown in Table 2.
three types (EVOH1/ MAhPE/ PE = 10 µm/ 10 µm/ 100 µm) was formed using EVOH1, PE, and MAhPE under the following conditions.
extruder for EVOH: single-screw extruder (Lab machine ME model CO-EXT, Toyo Seiki Seisaku-sho, Ltd.)
screw for EVOH: opening diameter 20 mmφ, L/D = 20, full-flight screw
extrusion temperatures for EVOH: feeding zone/ compression zone/ metering zone/ die = 175/ 210/ 220/ 230 °C
extruder for MAhPE: single-screw extruder (Technovel Corporation SZW20GT-20MG-STD)
screw for MAhPE: opening diameter 20 mmφ, L/D = 20, full-flight screw
extrusion temperatures for MAhPP: feeding zone/ compression zone/ metering zone/ die = 170/ 190/ 210/ 230 °C
extruder for PE: single-screw extruder (Research Laboratory of Plastics Technology Co., Ltd. GT-32-A)
screw for PE: opening diameter 32 mmφ, L/D = 28, full-flight screw
extrusion temperatures for PE: feeding zone/ compression zone/ metering zone/ die = 170/ 190/ 210/ 230 °C
die: 300 mm width, coat hanger die for three layers each selected from three types (manufactured by Research Laboratory of Plastics Technology Co., Ltd.)

The coextruded film thus obtained was uniaxially stretched five times in the machine direction (MD) at 115 °C using a uniaxial stretching apparatus to give a uniaxially stretched coextruded film (EVOH1/ MAhPE/ MDOPE = 2.0 µm/ 2.0 µm/ 20 µm).

### Examples 6 and 7

Multilayer structures and pouches were produced and evaluated in a similar manner to Example 1 except that the proportion of each material was adjusted such that the composition of the mayonnaise used as the content of the pouch was as presented in Table 2. The results are shown in Table 2.

### Example 8

A multilayer structure and a pouch were produced and evaluated in a similar manner to Example 1 except that the pouch was filled with 50 g of a 1.9% by mass aqueous dietary salt solution as the content of the pouch. The results are shown in Table 1.

### Example 9

A multilayer structure and a pouch were produced and evaluated in a similar manner to Example 1 except that a biaxially stretched EVOH1 film produced under the following conditions was used in place of the biaxially stretched coextruded film. The results are shown in Table 2.
extruder and extruded from a die onto a casting roll, while simultaneously blowing air at an air speed of 30 m/s using an air knife to give an unstretched film having an average thickness of 120 µm. The unstretched film thus obtained was brought into contact with hot water at 80 °C for 10 sec, stretched 3.2 times in the machine direction and 3.0 times in the transverse direction at 90 °C using a tenter-type simultaneous biaxial stretching apparatus, and further subjected to a heat treatment for 5 sec in a tenter which had been set at 170 °C to give a biaxially stretched EVOH1 film having an average thickness of 12 µm.

### Example 10

A multilayer structure and a pouch were produced and evaluated in a similar manner to Example 1 except that: the conditions were changed such that the average thickness of the coextruded film became EVOH1/ MAhPP/ PP = 2.0 µm/ 2.0 µm/ 40 µm; a vapor-deposited film was obtained without stretching; and the unstretched polypropylene film as a sealant was changed from CPP2 to CPP4. The results are shown in Table 2.

### Example 11

A multilayer structure and a pouch were produced and evaluated in a similar manner to Example 1 except that: a laminate (BOPP21 tie/ Al/ EVOH/ MAhPP/ BOPP1 = 20 µm/ 2 µm/ 50 nm/ 0.5 µm/ 0.5 µm/ 20 µm) was produced without laminating the unstretched polypropylene film (CPP2) to the vapor-deposited film; and an unstretched polypropylene film (CPP3) was heat-sealed at 200 °C for 30 sec onto the surface of BOPP1 of such a laminate to produce the multilayer structure. The results are shown in Table 2.

### Example 13

A multilayer structure and a pouch were produced and evaluated in a similar manner to Example 2 except that the conditions were changed such that the average thickness of the coextruded film became EVOH1/ MAhPP/ PP = 0.5 µm/ 0.5 µm/ 20 µm, and a vapor-deposited film was obtained without stretching. The results are shown in Table 2.

### Comparative Example 3

A multilayer structure and a pouch were produced and evaluated in a similar manner to Example 1 except that a biaxially stretched PET film (PET) having an average thickness of 12 µm was used in place of the biaxially stretched coextruded film. The results are shown in Table 2.

### Reference Example 1

A multilayer structure and a pouch were produced and evaluated in a similar manner to Example 2 except that mayonnaise containing 0.5% by mass sodium chloride, 75% by mass lipid, and 15% by mass moisture was prepared as the content, mayonnaise. The results are shown in Table 2.

### Reference Example 2

A multilayer structure and a pouch were produced and evaluated in a similar manner to Comparative Example 2 except that mayonnaise containing 0.5% by mass sodium chloride, 75% by mass lipid, and 15% by mass moisture was prepared as the content, mayonnaise. The results are shown in Table 2.

### Reference Example 3

A multilayer structure and a pouch were produced and evaluated in a similar manner to Comparative Example 1 except that mayonnaise containing 0.5% by mass sodium chloride, 75% by mass lipid, and 15% by mass moisture was prepared as the content, mayonnaise. The results are shown in Table 2.

**Table 1**

| | Barrier layer (A) | | Inorganic vapor-deposited layer (B) | | Adhesion layer (C) | | PO layer (D) | | Stretching of (A), (C), (D) layers | Heat-sealing layer (E) | |
|---|---|---|---|---|---|---|---|---|---|---|---|
| | type | average thickness | type^{*1} | average thickness | type | average thickness | type | average thickness | | Type | average thickness |
| | - | µm | - | Nm | - | Mm | - | µm | - | - | µm |
| Example 1 | EVOH1 | 0.5 | Al | 50 | MAhPP | 0.5 | BOPP1 | 20 | biaxially stretched | CPP2 | 70 |
| Example 2 | EVOH1 | 0.5 | Al | 50 | MAhPP | 0.5 | BOPP1 | 20 | biaxially stretched | CPP3 | 50 |
| Example 3 | EVOH1 | 0.5 | AlOx | 50 | MAhPP | 0.5 | BOPP1 | 20 | biaxially stretched | CPP3 | 50 |
| Example 4 | EVOH1 | 0.5 | Al | 50 | MAhPP | 0.5 | BOPP1 | 5 | biaxially stretched | CPP3 | 50 |
| Example 5 | EVOH1 | 2.0 | Al | 50 | MAhPE | 2.0 | MDOPE | 20 | uniaxially stretched | CPP3 | 50 |
| Example 6 | EVOH1 | 0.5 | Al | 50 | MAhPP | 0.5 | BOPP1 | 20 | biaxially stretched | CPP2 | 70 |
| Example 7 | EVOH1 | 0.5 | Al | 50 | MAhPP | 0.5 | BOPP1 | 20 | biaxially stretched | CPP2 | 70 |
| Example 8 | EVOH1 | 0.5 | Al | 50 | MAhPP | 0.5 | BOPP1 | 20 | biaxially stretched | CPP3 | 50 |
| Example 9 | EVOH1 | 12.0 | Al | 50 | - | - | - | - | biaxially stretched | CPP2 | 70 |
| Example 10 | EVOH1 | 2.0 | Al | 50 | MAhPP | 2.0 | CPP1 | 40 | unstretched | CPP4 | 30 |
| Example 11 | EVOH1 | 0.5 | Al | 50 | MAhPP | 0.5 | BOPP1 | 20 | biaxially stretched | CPP3 | 50 |
| Example 12 | EVOH1 | 0.5 | Al | 10 | MAhPP | 0.5 | BOPP1 | 20 | biaxially stretched | CPP3 | 50 |
| Example 13 | EVOH1 | 0.5 | Al | 50 | MAhPP | 0.5 | CPP1 | 20 | unstretched | CPP3 | 50 |
| Example 14 | EVOH1 | 0.5 | SiOx | 50 | MAhPP | 0.5 | BOPP1 | 20 | biaxially stretched | CPP3 | 50 |
| Comparative Example 1 | EVOH1 | 0.5 | Al | 50 | MAhPP | 0.5 | BOPP1 | 20 | biaxially stretched | CPP5 | 10 |
| Comparative Example 2 | EVOH1 | 0.5 | Al | 50 | MAhPP | 0.5 | BOPP1 | 20 | biaxially stretched | CPP3 | 50 |
| Comparative Example 3 | PET | 12 | Al | 50 | - | - | - | - | - | CPP3 | 50 |
| Comparative Example 4 | EVOH1 | 0.5 | Al | 50 | MAhPP | 0.5 | BOPP1 | 20 | biaxially stretched | CPP2 | 70 |
| Reference Example 1 | EVOH1 | 0.5 | Al | 50 | MAhPP | 0.5 | BOPP1 | 20 | biaxially stretched | CPP3 | 50 |
| Reference Example 2 | EVOH1 | 0.5 | Al | 50 | MAhPP | 0.5 | BOPP1 | 20 | biaxially stretched | CPP3 | 50 |
| Reference Example 3 | EVOH1 | 0.5 | Al | 50 | MAhPP | 0.5 | BOPP1 | 20 | biaxially stretched | CPP5 | 10 |

| | | | | | | | | | | | |
|---|---|---|---|---|---|---|---|---|---|---|---|
| *1 AlOx means aluminum oxide, and SiOx means silicon oxide. | | | | | | | | | | | |

**Table 2**

| | Layer configuration^{*1} | Content | | Evaluation | | | |
|---|---|---|---|---|---|---|---|
| | | NaCl | lipid | appearance | oxygen barrier property | recyclability | Al/ Al(OH)₃ |
| | - | % by mass | mass% | - | - | - | (molar ratio) |
| Example 1 | BOPP2/ tie/ Al/ EVOH1/ MAhPP/ BOPP1/ tie/ CPP2 | 1.9 | 75 | A | A | B | 2.7/1 |
| Example 2 | BOPP2/ tie/ Al/ EVOH1/ MAhPP/ BOPP1/ tie/ CPP3 | 1.9 | 75 | B | A | B | 2.5/1 |
| Example 3 | BOPP2/ tie/ AlOx/ EVOH1/ MAhPP/ BOPP1/ tie/ CPP3 | 1.9 | 75 | A | B | B | - |
| Example 4 | BOPP2/ tie/ Al/ EVOH1/ MAhPP/ BOPP1/ tie/ CPP3 | 1.9 | 75 | B | B | B | 2.0/1 |
| Example 5 | BOPP2/ tie/ Al/ EVOH1/ MAhPE/ MDOPE/ tie/ CPP3 | 1.9 | 75 | B | B | C | 2.2/1 |
| Example 6 | BOPP2/ tie/ Al/ EVOH1/ MAhPP/ BOPP1/ tie/ CPP2 | 1.9 | 95 | B | B | B | 2.0/1 |
| Example 7 | BOPP2/ tie/ Al/ EVOH1/ MAhPP/ BOPP1/ tie/ CPP2 | 3.1 | 75 | C | C | B | 1.8/1 |
| Example 8 | BOPP2/ tie/ Al/ EVOH1/ MAhPP/ BOPP1/ tie/ CPP3 | 1.9 | 0 | A | A | B | 2.6/1 |
| Example 9 | BOPP2/ tie/ Al/ EVOH1/ tie/ CPP2 | 1.9 | 75 | B | B | B | 2.1/1 |
| Example 10 | BOPP2/ tie/ Al/ EVOH1/ MAhPP/ CPP1/ tie/ CPP4 | 1.9 | 75 | B | B | B | 2.0/1 |
| Example 11 | BOPP2/ tie/ Al/ EVOH1/ MAhPP/ BOPP1/ CPP3 | 1.9 | 75 | B | A | A | 2.6/1 |
| Example 12 | BOPP2/ tie/ Al/ EVOH1/ MAhPP/ BOPP1/ tie/ CPP3 | 1.9 | 75 | C | C | B | 1.8/1 |
| Example 13 | BOPP2/ tie/ Al/ EVOH1/ MAhPP/ CPP1/ tie/ CPP3 | 1.9 | 75 | B | B | B | 2.0/1 |
| Example 14 | BOPP2/ tie/ SiOx/ EVOH1/ MAhPP/ BOPP1/ tie/ CPP3 | 1.9 | 75 | A | A | B | - |
| Comparative Example 1 | BOPP2/ tie/ Al/ EVOH1/ MAhPP/ BOPP1/ tie/ CPP5 | 1.9 | 75 | D | D | C | 1.4/1 |
| Comparative Example 2 | BOPP2/ tie/ BOPP1/ MAhPP/ EVOH1/ Al/ tie/ CPP3 | 1.9 | 75 | D | D | B | 1.3/1 |
| Comparative Example 3 | BOPP2/ tie/ Al/ PET/ tie/ CPP3 | 1.9 | 75 | C | C | D | 1.6/1 |
| Comparative Example 4 | BOPP2/ tie/ BOPP1/ MAhPP/ EVOH1/ Al/ tie/ CPP2 | 1.9 | 75 | D | D | B | 1.4/1 |
| Reference Example 1 | BOPP2/ tie/ Al/ EVOH1/ MAhPP/ BOPP1/ tie/ CPP3 | 0.5 | 75 | A | A | B | 2.6/1 |
| Reference Example 2 | BOPP2/ tie/ BOPP1/ MAhPP/ EVOH1/ Al/ tie/ CPP3 | 0.5 | 75 | A | A | B | 2.6/1 |
| Reference Example 3 | BOPP2/ tie/ Al/ EVOH1/ MAhPP/ BOPP1/ tie/ CPP5 | 0.5 | 75 | A | A | C | 2.6/1 |

| | | | | | | | |
|---|---|---|---|---|---|---|---|
| *1 tie represents a two-component urethane-based adhesive layer. | | | | | | | |

From the comparison of Reference Example 1 with Reference Example 2, it is proven that when the sodium chloride content of mayonnaise is less than 1% by mass, deterioration of the appearance and the gas barrier properties does not occur even in a mode of comprising the heat-sealing layer on the side of the barrier layer (A) on which the inorganic vapor-deposited layer (B) is laminated. From the comparison of Reference Example 1 with Reference Example 3, it is proven that when the sodium chloride content of mayonnaise is less than 1% by mass, deterioration of the appearance and the gas barrier properties does not occur even when a total average thickness of layers which comprising a polyolefin resin as a main component and which are layer laminated on a side opposite to a side of the barrier layer (A) on which the inorganic vapor-deposited layer (B) is laminated is less than 45 µm. Therefore, it is revealed that: the deterioration of the appearance and the gas barrier properties are problems which are not recognized heretofore, and are found when the sodium chloride content is 1% by mass or more and when a specific layer configuration is given; and as in Examples 1 to 14, such problems can be solved when a total average thickness of layers which comprise a polyolefin resin as a main component and which are laminated on a side opposite to a side of the barrier layer (A) on which the inorganic vapor-deposited layer (B) is laminated is 45 µm or more.

## Claims

1. A product comprising:
a package comprising a multilayer structure; and
a content contained in the package, the content having a sodium chloride content of 1% by mass or more,
wherein
the multilayer structure comprises:
a barrier layer (A) comprising an ethylene-vinyl alcohol copolymer (a) as a main component;
an inorganic vapor-deposited layer (B) laminated on the barrier layer (A), the inorganic vapor-deposited layer (B) having an average thickness of 7 nm or more and 100 nm or less; and
a heat-sealing layer (E) which is an outermost layer on a side opposite to a side of the barrier layer (A) on which the inorganic vapor-deposited layer (B) is laminated, the heat-sealing layer (E) comprising a polyolefin (e) as a main component,
wherein
a total average thickness of layers comprising a polyolefin resin as a main component and being laminated on a side opposite to a side of the barrier layer (A) on which the inorganic vapor-deposited layer (B) is laminated is 45 µm or more, and
the heat-sealing layer (E) is positioned on an inner surface side of the package.

2. The product according to claim 1, wherein the barrier layer (A) is stretched in at least a uniaxial direction.

3. The product according to claim 1 or 2, wherein the barrier layer (A) has an average thickness of 0.1 µm or more and 20 µm or less.

4. The product according to any one of claims 1 to 3, wherein a proportion of the average thickness of the barrier layer (A) with respect to an average thickness of the multilayer structure is 5% or less.

5. The product according to any one of claims 1 to 4, wherein the inorganic vapor-deposited layer (B) is composed of aluminum, aluminum oxide, or silicon oxide.

6. The product according to any one of claims 1 to 5, wherein the heat-sealing layer (E) has an average thickness of 20 µm or more and 200 µm or less.

7. The product according to any one of claims 1 to 6, wherein
the multilayer structure comprises: an adhesion layer (C) comprising an adhesive resin (c) as a main component; and a polyolefin layer (D) comprising a polyolefin (d) as a main component, and
the multilayer structure has a layer configuration in which the inorganic vapor-deposited layer (B), the barrier layer (A), the adhesion layer (C), the polyolefin layer (D), and the heat-sealing layer (E) are laminated in this order.

8. The product according to claim 7, wherein the barrier layer (A), the adhesion layer (C), and the polyolefin layer (D) are stretched in at least a uniaxial direction.

9. The product according to claim 7 or 8, wherein the barrier layer (A), the adhesion layer (C), and the polyolefin layer (D) are a coextruded film.

10. The product according to any one of claims 7 to 9, wherein resins serving as main components of the polyolefin layer (D) and the heat-sealing layer (E) are the same resin species.

11. The product according to any one of claims 1 to 10, wherein the sodium chloride content of the content is 5% by mass or less.

12. The product according to any one of claims 1 to 11, wherein the content comprises lipid.

13. The product according to claim 12, wherein the lipid content of the content is 95% by mass or less.

14. The product according to claim 12 or 13, wherein the lipid comprises triglyceride as a main component.
